Europäisches Patentamt

European Patent Office

Office européen des brevets

(11) Numéro de publication: **0 376 841**
**A1**

## (12) DEMANDE DE BREVET EUROPEEN

(21) Numéro de dépôt: 89403658.1

(22) Date de dépôt: **27.12.89**

(51) Int. Cl.5: **G11B 33/04, G11B 23/023**

(30) Priorité: **27.12.88 FR 8817216**

(43) Date de publication de la demande:
**04.07.90 Bulletin 90/27**

(84) Etats contractants désignés:
**BE ES NL**

(71) Demandeur: **Valin, Didier**
**L'Hermitage Varennes**
**F-36300 Le Blanc(FR)**

(72) Inventeur: **Valin, Didier**
**L'Hermitage Varennes**
**F-36300 Le Blanc(FR)**

(74) Mandataire: **Rodhain, Claude et al**
**Cabinet Claude Rodhain 30, rue la Boétie**
**F-75008 Paris(FR)**

(54) **Présentoir à picots pour disques compacts.**

(57) La présente invention concerne un présentoir d'objets plats.

Le but de l'invention est de réaliser un tel présentoir permettant un accès facile aux dits objets et une visualisation rapide de l'ensemble de ceux-ci.

Ce but est atteint à l'aide d'un présentoir conprenant un fond (2) présentant sur sa face supérieure au moins deux rangées (3) d'au moins deux picots (4) constituant des points d'appui pour les objets plats, la distance entre deux picots (4) voisins d'une même rangée étant légèrement supérieure à l'épaisseur (E) dudit objet plat (1), et les picots (4) de chaque rangée étant alignés de façon à former des couloirs (7) dans lesquels sont disposés lesdits objets plats.

Ce présentoir est plus spécialement destiné aux disques compacts.

FIG.1

## Présentoir à picots pour disques compacts.

La présente invention concerne un présentoir d'objets minces et plats, tels que pochette de disque, cassette magnétique, etc., et notamment des disques compacts.

Le développement et l'accroissement des ventes de disques compacts poussent de nombreux responsables de magasins à s'équiper de présentoirs permettant de présenter au mieux les disques compacts à la clientèle. Ces présentoirs doivent permettre au client de visualiser facilement le titre du disque, de parcourir rapidement l'ensemble des disques proposés et de sortir ce disque du présentoir pour le regarder aisément.

On connait déjà des présentoirs pour disques (voir notamment le brevet 7130956 du 26 août 1971), constitués d'un socle muni de deux traverses parallèles dans lesquelles sont prévues des encoches, et d'un support de disque comprenant une partie supérieure formant pince et fixant la base du disque, et une partie inférieure formant un axe coopérant avec lesdites encoches. Ainsi, lorsque le disque est placé dans le support et celui-ci dans les encoches, on peut faire basculer le disque de l'avant vers l'arrière ou inversement. Ce présentoir est difficilement adaptable aux disques compacts, en raison de la forme de la pince du support, conçue pour des objets très minces. En outre, ce présentoir présente divers inconvénients, d'une part les extrémités supérieures de plusieurs disques voisins se touchent et donc risquent de s'endommager, et d'autre part lorsqu'un client a sorti un disque de son support, la remise en place est délicate et demande un certain effort de minutie et de patience que le client n'est pas toujours prêt à fournir.

On connait en outre un présentoir pour disques, constitué d'un support de section générale en forme de U dont les deux ailes avant et arrière servent d'appui aux pochettes, le fond de ce support étant pourvu d'une série de rainures parallèles dans lesquelles se logent la base des pochettes. Là encore, on peut constater que les extrémités des pochettes se touchent, et qu'elles risquent d'être abimées lors d'une manipulation répétée.

En conséquence, l'invention a pour objet de remédier à ces inconvénients.

Un premier objet de l'invention est de créer un présentoir pour objets plats, notamment disques compacts, permettant un accès facile à la marchandise, une bonne visualisation des produits, et une mise en place aisée tout en garantissant une bonne stabilité des disques.

Un deuxième objet de l'invention est de réaliser un présentoir évitant l'endommagement des disques.

Un troisième objet de l'invention est de réaliser un présentoir à des coûts de fabrication relativement faibles.

Ces objets, ainsi que d'autres qui apparaitront par la suite, sont atteints notamment à l'aide d'un présentoir pour objets plats tels que pochettes de disque, cassettes de bande magnétique, cassettes vidéo et notamment disques compacts, caractérisé en ce qu'il comprend un fond présentant sur sa face supérieure au moins deux rangées d'au moins deux picots constituant des points d'appui pour les objets plats, la distance entre deux picots voisins d'une même rangée étant légèrement supérieure à l'épaisseur dudit objet plat, et les picots de chaque rangée étant alignés de façon à former des couloirs dans lesquels sont disposés lesdits objets plats.

D'autres caractéristiques et avantages de l'invention apparaitront mieux à la lecture de la description suivante d'une forme de réalisation de l'invention donnée à titre d'exemple non limitatif et illustrée sur les dessins ci-joints représentant une vue en perspective du présentoir selon l'invention.

La figure 1 représente une vue générale en perspective du présentoir.

Les figures 2, 3 et 4 représentent une forme préférentielle du picot, respectivement vue selon la coupe 2-2, selon la coupe 3-3 et selon la section 4-4.

La figure 5 représente, en coupe parallèle au sens longitudinal du présentoir, deux picots et entre eux un disque en position de butée inclinée.

La figure 6 est une vue de dessus du présentoir.

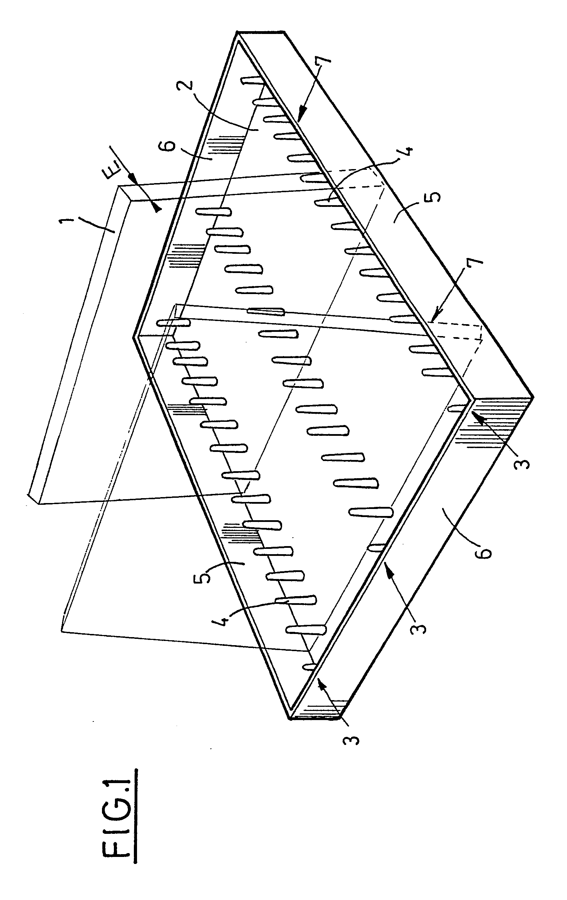

Comme illustré en figure 1, le présentoir d'objets plats 1 selon l'invention comprend un fond 2 sensiblement rectangulaire, bordé sur ses deux côtés longitudinaux d'un rebord vertical 5 de faible hauteur, et, selon l'exemple représenté, sur ses deux extrémités d'un bord 6 vertical de hauteur différente que le rebord longitudinal ; le présentoir comporte, de façon générale, au moins un bord d'extrémité 6.

On dispose sur le fond 2 au moins deux rangées parallèles 3 de picots 4 et de préférence trois rangées. Ces rangées de picots sont disposées parallèlement à l'axe longitudinal du fond 2, et uniformément, de façon à définir une rangée centrale et deux rangées d'extrémité de picots 4. Les picots 4 des trois rangées sont, en outre, alignés de façon à former des couloirs 7 dans lesquels sont disposés lesdits objets plats.

La distance entre deux picots voisins d'une même rangée est légèrement supérieure à l'épaisseur E d'un disque compact 1 de façon à permettre le basculement de celui-ci d'avant en arrière ou inversement, comme illustré en figure 1. Les sommets des picots constituent donc des points d'appui des disques compacts. Ces picots 4 présentent une conicité dirigée vers le haut, c'est-à-dire qu'ils sont coniques ou tronconiques, avec leur petit diamètre dirigé vers le haut.

Si l'alignement transversal de trois picots de trois rangées différentes doit toujours être respecté pour que le disque compact soit uniformément supporté, en revanche on peut espacer différemment deux picots voisins d'une même rangée pour former des couloirs 7 plus ou moins larges, suivant que l'on souhaite présenter des disques compacts simples ou doubles.

Lorsque le disque 1 est en place, son déplacement transversal est limité par les rebords 5.

Lors de sa fabrication, ce présentoir pourra être moulé d'une pièce par injection et réalisé dans diverses matières plastiques.

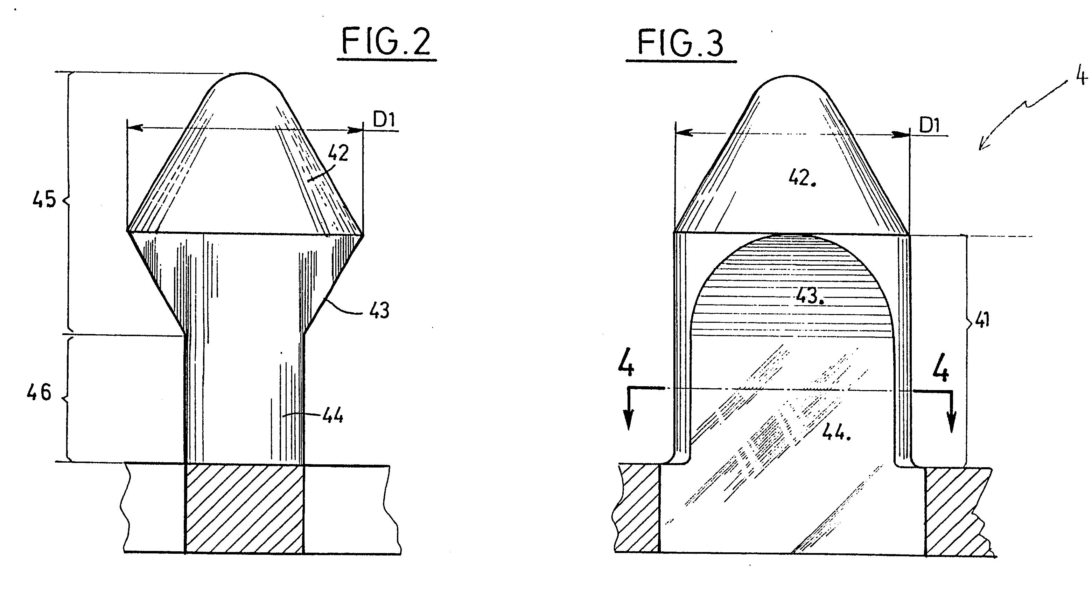

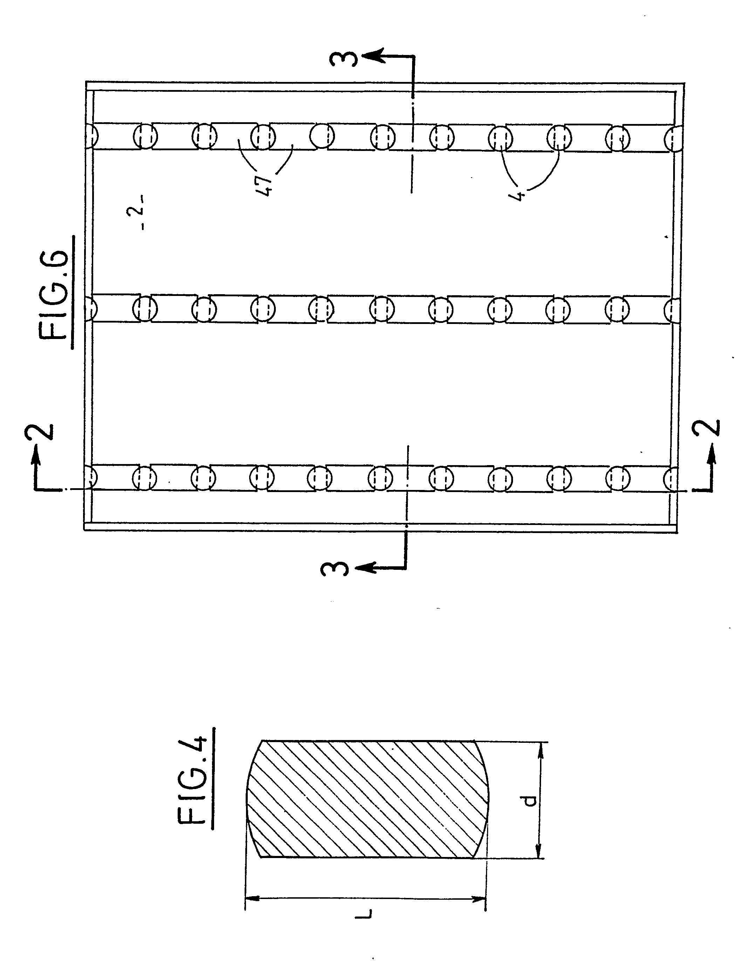

Une forme préférentielle des picots 4 est représentée sur les figure 2, 3 et 4.

Le picot 4 est, selon cette forme préférentielle, formé d'une partie inférieure 41 et d'une partie supérieure de forme cônique arrondie formant le bout du picot 42 ; la partie inférieure 41 est de la forme d'un cylindre circulaire de diamètre constant égal au diamètre de base du bout cônique, tronqué selon une surface inclinée 43 et selon une surface verticale 44, de façon symétrique par rapport à à un plan de symétrie du picot perpendiculaire au sens longitudinal du présentoir, ces surfaces étant dirigées parallèlement au couloir (7).

Le picot 4 présente donc une partie saillante supérieure 45, de diamètre maximum D1 égal au diamètre inférieur du bout cônique 42 et une partie de pied 46 de largeur maximum L égale audit diamètre D1 et d'épaisseur d inférieure ; de préférence, $d = L / 2$ et plus précisément L est de l'ordre de 8 mm et d de l'ordre de 4 mm.

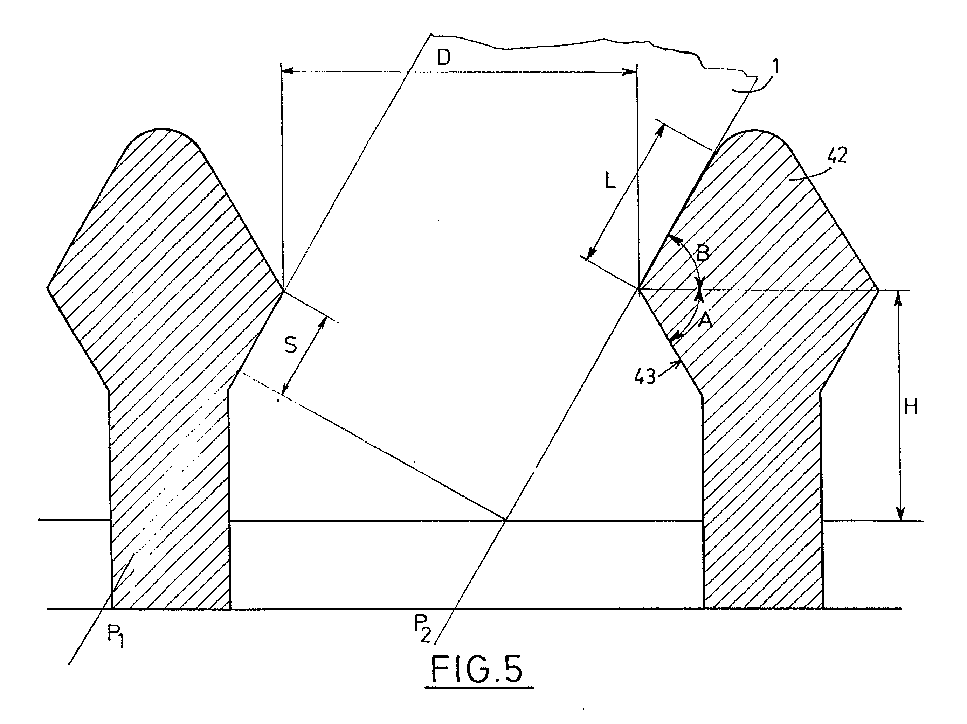

Comme il est représenté sur la figure 5, la surface inclinée 43 présente une inclinaison d'angle A par rapport à un plan horizontal. Cet angle A est de préférence égal à l'angle de conicité B du bout 42 par rapport à un plan horizontal.

La hauteur des picots hors du fond, leur distance mutuelle D et l'angle A sont déterminés en fonction de la largeur des disques, afin de permettre l'agencement représenté sur la figure 5, assurant un blocage en position stable du disque, lorsque ce dernier glisse par une de ces arêtes sur le fond et prend une position inclinée.

Comme on le voit sur cette figure 5, les angles A et B étant égaux, lorsque le disque 1 est en position de butée oblique, il doit exister une surface de contact 5 suffisante, comprise dans la surface 43, et une ligne de contact L, génératrice du bout cônique 42 ; cette surface S et cette ligne L sont comprises dans des plans parallèles et reçoivent en butée les faces du disque.

Ceci est obtenu par le fait que :
- la distance D est légèrement supérieure à l'épaisseur E du disque, afin de permettre une introduction aisée du disque dans le présentoir.
- la distance entre le plan P1 contenant la surface 43 et le plan P2 parallèle au plan P1 et contenant la génératrice du bout cônique formant la ligne de contact L doit être sensiblement égale à l'épaisseur E du disque. En conséquence, l'angle A et la distance D sont tels que : $\sin us\ A = E / D$ ; de préférence la valeur de A sera sensiblement de 60°.

- enfin, dans le but d'assurer une surface de contact S suffisante, la hauteur H de la base du bout cônique 42 par rapport à la surface supérieure du fond doit être largement supérieure à E x cosinus A.

D'autre part, le fond 2 du présentoir est pourvu, entre les picots 4 d'une même rangée, de trous rectangulaires 47 ; la longeur de ceux-ci est égale à l'espacement entre les bases des parties de pied 46 des picots d'une même rangée ; leur largeur est légèrement supérieure à la largeur maximum L des picots.

Ces trous 47 permettent d'une part une certaine élasticité des picots 4, lors de la butée du disque 1 pivoté et, d'autre part, une économie de matière appréciable.

## Revendications

1) Présentoir pour objets plats tels que pochettes de disque, cassettes de bande mangétique, cassettes vidéo et notamment disques compacts, caractérisé en ce qu'il comprend un fond (2) présentant sur sa face supérieure au moins deux rangées (3) de picots (4) constituant des points d'appui pour les objets plats, la distance entre deux picots (4) voisins d'une même rangée étant légèrement supérieure à l'épaisseur (E) dudit objet plat (1), et les picots (4) de chaque rangée étant alignés de façon à former des couloirs (7) dans lesquels sont disposés lesdits objets plats.

2) Présentoir pour objets plats selon la revendication 1, caractérisé en ce qu'il comprend deux rebords verticaux (5) limitant le déplacement transversal desdits objets plats.

3) Présentoir pour objets plats selon la revendication 1, caractérisé en ce qu'il comprend trois rangées (3) parallèles de picots (4), réparties uniformément.

4) Présentoir pour objets plats selon l'une quelconque des revendications précédentes, caractérisé en ce qu'il comporte au moins un bord d'extrémité (6).

5) Présentoir pour objets plats selon l'une quelconque des revendications précédentes, caractérisé en ce que les picots (4) présentent une conicité dirigée vers le haut.

6) Présentoir pour objet plat selon la revendication 5, caractérisé en ce que les picots (4) sont formés d'une partie inférieure (41) et d'une partie supérieure de forme cônique arrondie formant le bout (42) du picot.

7) Présentoir pour objet plat selon la revendication 6, caractérisé en ce que la partie inférieure (41) est formée d'un cylindre circulaire de diamètre constant égal au diamètre de base (D1) du bout cônique (42), tronqué selon une surface inclinée (43) et une surface verticale (44), de façon symétrique à un plan de symétrie du picot perpendiculaire au sens longitudinal du présentoir.

8) Présentoir pour objet plat selon la revendication 7, caractérisé en ce que la surface inclinée (43) présente une inclinaison d'angle A par rapport à un plan horizontal, égal à l'angle de conicité B du bout (42) par rapport à un plan horizontal.

9) Présentoir pour objet plat selon la revendication 8, caractérisé en ce que la distance entre un plan (P1) contenant la surface inclinée (43) d'un picot et le plan (P2) parallèle au plan (P1) et contenant la génératrice du bout cônique d'un picot adjacent d'une même rangée, formant la ligne de contact L pour un disque incliné en butée, est sensiblement égale à l'épaisseur E du disque et la hauteur H de la base du bout cônique (42) par rapport à la surface supérieure du fond est suffisamment grande pour assurer une surface de contact S du disque sur la surface inclinée (43) du picot, suffisante.

10) Présentoir pour objet plat selon l'une quelconque des revendications précédentes, caractérisé en ce que le fond (2) du présentoir est pourvu, entre les picots (4) d'une même rangée, de trous rectangulaires (47), de longueur égale à la distance entre les bases des parties de pied (46) des picots d'une même rangée, et de largeur légèrement supérieure à la largeur maximum (L) des picots.

FIG.1

EP 0 376 841 A1

FIG.3

FIG.2

FIG.6

FIG.4

EP 0 376 841 A1

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4595098 (K. D. KRYTER)<br>* abrégé; revendication 1; figures * | 1, 2 | G11B33/04<br>G11B23/023 |
| X | EP-A-263227 (ERNST STADELMANN GESELLSCHAFT)<br>* colonne 3, ligne 13 - colonne 4, ligne 11; figure 1 * | 1, 2, 4-6 | |
| A | EP-A-162999 (ERNST STADELMANN GESELLSCHAFT)<br>* page 5, ligne 26 - page 7, ligne 8; figures * | 1, 2, 4-6, 8, 9 | |
| A | BE-A-395609 (VANDER HAEGHEN)<br>* page 2, lignes 20 - 30; figures * | 1, 3 | |
| A | US-A-4629067 (P. C. PAVLIK)<br>* colonne 3, ligne 1 - colonne 4, ligne 34; revendication 1; figure 4 * | 1, 2, 8, 9 | |
| A | DE-C-3739897 (WERTHMULLER SYSTEMEINRICHTUNG)<br>* colonne 7, lignes 47 - 68; figure 16 * | 8, 9 | |
| | | | **DOMAINES TECHNIQUES RECHERCHES (Int. Cl.5)** |
| P,A | EP-A-334457 (R. A. MEUWESE)<br>* colonne 2, ligne 42 - colonne 3, ligne 55; figures * | 5, 6, 8, 9 | G11B<br>A47F |

Le présent rapport a été établi pour toutes les revendications

| Lieu de la recherche | Date d'achèvement de la recherche | Examinateur |
|---|---|---|
| LA HAYE | 29 MARS 1990 | SCHWANDER |